(19) Europäisches Patentamt
European Patent Office
Office européen des brevets

(11) **EP 4 200 968 B1**

(12) **EUROPÄISCHE PATENTSCHRIFT**

(45) Veröffentlichungstag und Bekanntmachung des Hinweises auf die Patenterteilung:
**10.09.2025 Patentblatt 2025/37**

(21) Anmeldenummer: **21746711.7**

(22) Anmeldetag: **20.07.2021**

(51) Internationale Patentklassifikation (IPC):
*H02M 1/00* (2006.01)    *H02M 1/08* (2006.01)
*H02M 3/156* (2006.01)

(52) Gemeinsame Patentklassifikation (CPC):
**H02M 1/0058; H02M 1/0009; H02M 1/083;
H02M 3/156;** Y02B 70/10

(86) Internationale Anmeldenummer:
**PCT/EP2021/070222**

(87) Internationale Veröffentlichungsnummer:
**WO 2022/037876 (24.02.2022 Gazette 2022/08)**

(54) **VERFAHREN UND VORRICHTUNG ZUR ERMITTLUNG EINES PARAMETERS, WOBEI DER PARAMETER EINEN STROM ODER EINE SPANNUNG IN EINER SCHALTUNGSANORDNUNG CHARAKTERISIERT**

METHOD AND APPARATUS FOR ASCERTAINING A PARAMETER, SAID PARAMETER CHARACTERIZING A CURRENT OR A VOLTAGE IN A CIRCUIT ARRANGEMENT

PROCÉDÉ ET APPAREIL POUR DÉTERMINER UN PARAMÈTRE, LEDIT PARAMÈTRE CARACTÉRISANT UN COURANT OU UNE TENSION DANS UN AGENCEMENT DE CIRCUIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.08.2020 DE 102020210577**

(43) Veröffentlichungstag der Anmeldung:
**28.06.2023 Patentblatt 2023/26**

(73) Patentinhaber: **Robert Bosch GmbH
70442 Stuttgart (DE)**

(72) Erfinder:
• **JIPTNER, Michael
71272 Renningen (DE)**
• **BURA, Dennis
71272 Renningen (DE)**
• **MICHELS, Markus
70469 Stuttgart (DE)**

(56) Entgegenhaltungen:
CH-A2- 701 856          JP-A- 2003 092 877
US-A1- 2006 061 343     US-A1- 2009 309 573

**Beschreibung**

Die Erfindung betrifft ein Verfahren und eine Vorrichtung zur Ermittlung eines Parameters, wobei der Parameter einen Strom oder eine Spannung in einer Schaltungsanordnung charakterisiert. Ferner betrifft die Erfindung einen Stromregler, einen Antriebsstrang mit einer entsprechenden Vorrichtung und ein Fahrzeug mit einem Antriebsstrang sowie ein Computerprogramm und ein maschinenlesbares Speichermedium.

Stand der Technik

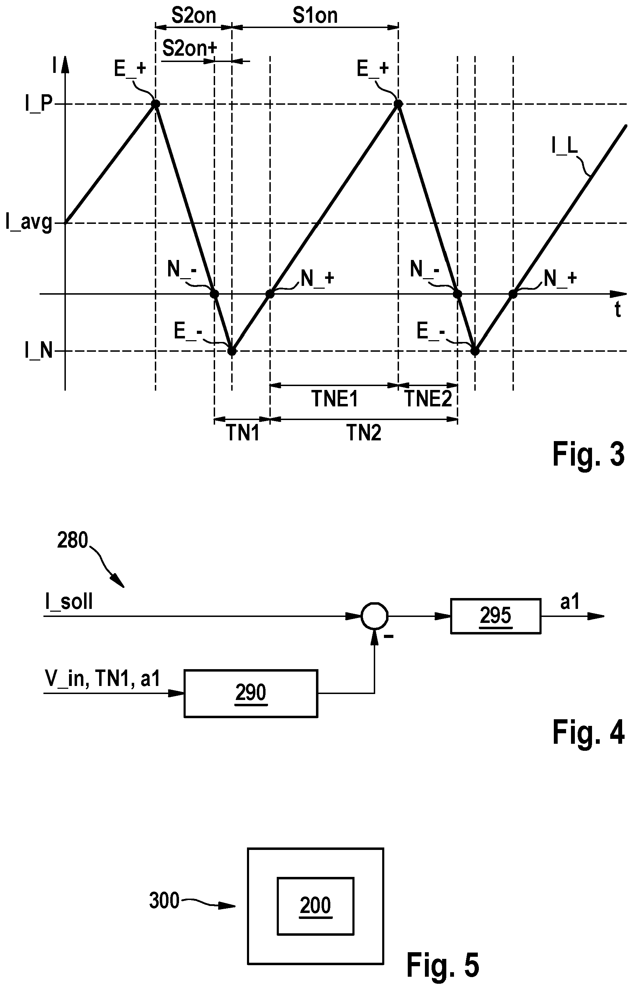

Verfahren und Vorrichtungen zur Ermittlung eines Parameters, wobei der Parameter einen Strom oder eine Spannung in einer Schaltungsanordnung charakterisiert sind aus den Druckschriften US 2006/061343 A1, US 2009/309573 A1, JP 2003 092877 A und CH 701 856 A2 bekannt. Schaltungsanordnungen für aktive Spannungswandler für den Einsatz in Fahrzeugen sind aus dem Stand der Technik bekannt. Es werden hohe Anforderungen an die Leistungsdichte und den Wirkungsgrad der Spannungswandler gestellt. Um die Baugröße der passiven Bauelemente zu minimieren, insbesondere die Induktivitäten, Drosseln oder Transformatoren, werden die Spannungswandler mit hohen Schaltfrequenzen im Bereich einiger 100 kHz betrieben. Um gleichzeitig eine hohe Effizienz sicherzustellen, werden die in den aktiven Spannungswandlern eingesetzten Schaltelemente oder Leistungshalbleiter weich eingeschaltet, was auch "zero voltage switching" (ZVS) genannt wird. Die Regelung solcher Systeme unter gleichzeitiger Sicherstellung des ZVS stellt eine große technische Herausforderung dar. Häufig wird eine solche Regelung mittels einer Detektion des Nulldurchgangs des Stroms, auch Zero Current Detection (ZCD) genannt, realisiert, wie beispielsweise in der Druckschrift CH 701 856 A2 offenbart. Diese Regelungen bieten bezüglich ihrer Dynamik und Stabilität viele Vorteile.
Besonders im Hinblick auf die stetig größer werdenden Schaltfrequenzen in der Leistungselektronik und den damit verbundenen kurzen Periodendauern ergeben sich jedoch auch entscheidende Nachteile des klassischen ZCD-Verfahrens: Das unmittelbare Reagieren auf einen ermittelten oder detektierten Nulldurchgang des Stroms stellt sehr hohe Anforderungen an die Steuerungseinheit des Leistungselektronischen Systems (z.B. Mikrokontroller oder ASIC). Dies kommt daher, dass unmittelbar, das heißt noch innerhalb derselben Schaltperiode, auf den Nulldurchgang des Stroms reagiert werden muss, beispielsweise muss bei derartigen Verfahren nach dem Nulldurchgang die verbleibende Einschaltzeit (vgl. Figur 3, S2on+) des eingeschalteten Schalters ermittelt werden. Dabei müssen mehrere Rechenoperationen und Registerzugriffe durchgeführt werden, die nicht länger als einen kleinen Teil der Periode der Schaltfrequenz der Leistungselektronik dauern dürfen. Erschwerend kommt hinzu, dass für eine Plausibilisierung und Fehlerkorrektur des ZCD-Signals keine Zeit bleibt. Darüber hinaus bieten viele Mikrokontroller keine Möglichkeit eines unmittelbaren, äußeren Eingriffs in das PWM-Modul. Des Weiteren ist im klassischen ZCD-Verfahren die Schaltfrequenz üblicherweise nicht kontrollierbar. Das klassische Verfahren stellt auch keine Regelung im eigentlichen Sinn dar, sondern ist eine Steuerung.
Daher besteht ein Bedarf nach Regelungsverfahren für aktive Spannungswandler, bei denen keine Notwendigkeit besteht, unmittelbar auf einen Nulldurchgang des Stromes zu reagieren.

Offenbarung der Erfindung

Es wird ein erfindungsgemäßes Verfahren zur Ermittlung eines Parameters bereitgestellt, wobei der Parameter einen Strom oder eine Spannung in einer Schaltungsanordnung charakterisiert. Die Schaltungsanordnung umfasst eine Induktivität, wobei ein alternierender Drosselstrom durch die Induktivität fließt. Das Verfahren umfasst die Schritte: Ermitteln mindestens einer Zeitdauer zwischen zwei Nulldurchgängen des Drosselstromes; Ermitteln des Parameters in Abhängigkeit der ermittelten Zeitdauer.
Es wird ein Verfahren bereitgestellt, bei dem ein Parameter ermittelt wird, wobei der Parameter einen Strom oder eine Spannung in einer Schaltungsanordnung charakterisiert. Die Schaltungsanordnung umfasst eine Induktivität. Die Induktivität ist bevorzugt eine Drossel oder eine Primär- oder Sekundärwicklung eines Transformators, welcher bevorzugt in einem Gleichspannungswandler oder in einem Ladegerät, bevorzugt zur galvanischen Trennung des Ein- und Ausgangs, eingesetzt wird. Die Induktivität wird von einem alternierenden Drosselstrom durchflossen. Alternierend bedeutet, dass der Drosselstrom abwechselnd negative und positive Werte annimmt. Damit der Drosselstrom alterniert wird die Induktivität an einem ersten Anschluss der Induktivität abwechselnd mit einem ersten Potential, bevorzugt positiven Potential und einem zweiten Potential, bevorzugt negativen Potential, verbunden. Resultierend ergibt sich ein Drosselstrom durch die Induktivität, welcher abwechselnd linear ansteigt, bis zu einem positiven Maximum, und anschließend linear abfällt bis zu einem negativen Minimum und so weiter. Der Zeitpunkt, zu dem der Drosselstrom das positive Maximum erreicht, wird im Folgenden positiver Eckpunkt genannt. Der Zeitpunkt, zu dem der Drosselstrom das negative Minimum erreicht, wird im Folgenden negativer Eckpunkt genannt. Der Wechsel von dem linear ansteigend zu linear abfallend, oder umgekehrt, erfolgt beim Wechsel der einseitigen Verbindung der Induktivität von dem ersten Potential zu dem zweiten Potential, oder umgekehrt. Während des Abfallens des Drosselstroms von dem positiven Maximum zu dem negativen Minimum wechselt bei einem sogenannten, bevorzugt ersten, Nulldurchgang des Drosselstroms das Vorzeichen des Drosselstroms von positiv auf negativ. Während des Ansteigens des Drosselstroms von dem negativen Minimum zu dem positiven Maximum wechselt bei einem, bevorzugt zweiten, Nulldurchgang des Drosselstroms das Vorzeichen des Drosselstroms von negativ auf positiv. Bevorzugt erfolgt das Verbinden des ersten Anschlusses der Induktivität mit dem ersten Potential und dem zweiten Potential mittels einer Halbbrücke mit zwei Schaltelementen, wobei ein erstes Schaltelement einerseits mit dem ersten Potential verbunden ist und andererseits mit einem Mittelabgriff der Halbbrücke verbunden ist und ein zweites Schaltelement einerseits mit dem zweiten Potential verbunden ist und andererseits mit dem Mittelabgriff der Halbbrücke verbunden ist, wobei die Induktivität mit dem ersten Anschluss mit dem Mittelabgriff verbunden ist. Hierzu wird bevorzugt abwechselnd jeweils ein Schaltelement eingeschaltet während das andere ausgeschaltet wird. Somit entspricht auch der Zeitpunkt des Ansteuerns mindestens eines der Schaltelemente jeweils einem der Zeitpunkte, zu dem der Drosselstrom entweder das positive Maximum oder das negative Minimum erreicht. Bevorzugt ist die Induktivität mit einem zweiten Anschluss mit einem dritten Potential verbunden. Damit das erste und das zweite Potential unterschiedlich ist, liegt bevorzugt eine Eingangsspannung zwischen zweien Potentialen des ersten, zweiten oder dritten Potentials an. Die Eingangsspannung ist bevorzugt eine Wechselspannung oder eine Gleichspannung. Bevorzugt ist die Frequenz der Eingangsspannung sehr viel kleiner, bevorzugt mindestens eine Größenordnung geringer, als die Frequenz des alternierenden Drosselstroms. Bevorzugt ergibt sich sodann eine annähernd konstante Spannung während einer Periode des alternierenden Drosselstroms. Mittels einem Schritt des Verfahrens wird mindestens eine Zeitdauer zwischen zwei Nulldurchgängen des Drosselstromes, bevorzugt zwischen einem ersten und einem darauffolgenden zweiten Nulldurchgang des Drosselstroms, ermittelt. Somit wird bevorzugt die Zeitdauer zwischen einem ersten Nulldurchgang des Drosselstroms ermittelt, bei dem das Vorzeichen von positiv auf negativ wechselt und einem unmittelbar darauffolgenden zweiten Nulldurchgang des Drosselstroms ermittelt, bei dem das Vorzeichen von negativ auf positiv wechselt ermittelt oder umgekehrt. Bei der Formulierung der Ermittlung der Zeitdauer zwischen zwei Nulldurchgängen wird ein Nulldurchgang als ein Zeitpunkt verstanden, zu dem das Vorzeichen des alternierenden Drosselstroms von positiv auf negativ oder umgekehrt wechselt. In einem weiteren Schritt des Verfahrens wird der Parameter in Abhängigkeit der ermittelten Zeitdauer ermittelt.

Vorteilhaft wird ein Verfahren bereitgestellt, welches es ermöglicht, in Abhängigkeit einer Zeitgröße, welche in Zusammenhang mit den Nulldurchgängen eines Drosselstroms ermittelt wird, einen Parameter zu ermitteln, wobei der Parameter einen Strom oder eine Spannung in einer Schaltungsanordnung charakterisiert. Hierzu wird kein Strom- oder Spannungssensor benötigt. Vorteilhaft wird stattdessen die Zeitdauer zwischen zwei Nulldurchgängen verwendet um bevorzugt Informationen wie einen Mittelwert oder Spitzenwerte des Drosselstroms oder einer Spannung innerhalb der Schaltungsanordnung zu ermitteln. Bevorzugt basierend auf diesen neu gewonnenen Parametern oder Messwerten wird dann eine Regelung oder eine Zustandsschätzung aufgebaut. Vorteilhaft kann bei diesem Verfahren eine oder mehrere ganze Perioden vergehen, bevor mittels des Reglers oder Zustandsschätzers reagiert wird. Daher kann bevorzugt eine Plausibilisierung und Fehlererkennung eines ZCD-Signals durchgeführt werden, was die Güte erhöht. Vorteilhaft kann ein günstigerer Mikrokontroller verwendet werden, da für die benötigten Rechenoperationen mehr Zeit zur Verfügung steht. Auf Basis der gewonnenen Informationen können bevorzugt weitere Regler für mehrere Größen eingesetzt werden. Bevorzugt kann unabhängig vom Mittelwert des Drosselstroms auch eine Regelung für die Stromumkehrpunkte oder die Schaltfrequenz aufgebaut werden. Bevorzugt kann mithilfe dieses Verfahrens der zu regelnde Drosselstrom hochdynamisch (jede Schaltperiode) erfasst werden. Vorteilhaft kann der ansonsten nötige Stromsensor eingespart werden oder es kann ein günstigerer Sensor mit weniger Bandbreite eingesetzt werden. Vorteilhaft ergeben sich durch zusätzliche Zustandsschätzungen basierend auf den Nulldurchgangs-Zeiten Einsparungspotentiale für weitere Sensoren. Vorteilhaft wird bevorzugt der Parameter zur Regelung eines Spannungswandlers als Rückführgröße eines Regelkreises verwendet.

In einer anderen Ausgestaltung der Erfindung bezieht sich das Verfahren auf die Ermittlung eines Parameters, wobei der Parameter einen Strom durch die Induktivität in der Schaltungsanordnung charakterisiert. Die Schaltungsanordnung umfasst eine Halbbrücke mit einem ersten Schaltelement und einem zweiten Schaltelement. Das erste Schaltelement ist einerseits mit einem ersten Potential verbunden und ist andererseits mit einem Mittelabgriff der Halbbrücke verbunden. Das zweite Schaltelement ist einerseits mit einem zweiten Potential verbunden und andererseits mit dem Mittelabgriff der Halbbrücke. Die Induktivität ist mit einem ersten Anschluss mit dem Mittelabgriff verbunden und mit einem zweiten Anschluss mit einem dritten Potential verbunden. Zwischen dem ersten Potential und dem dritten Potential liegt eine Eingangsspannung an. Das Verfahren umfasst die Schritte: Abwechselndes Ansteuern, oder Ein und Ausschalten, des ersten und des zweiten Schaltelementes mit einem vorgebbaren Tastgrad, sodass sich der alternierende Drosselstrom durch die Induktivität ergibt; Ermitteln der Zeitdauer zwischen den Nulldurchgängen des Drosselstroms, Ermitteln des Parameters in Abhängigkeit der Eingangsspannung, der Größe der Induktivität, dem Tastgrad und der Zeitdauer zwischen den Nulldurchgängen, bevorzugt eines ersten und eines zweiten Nulldurchgangs, des Drosselstroms.

Vorteilhaft wird ein Verfahren für eine Schaltungsanordnung bereitgestellt, die es ermöglicht, in Abhängigkeit einer Zeitgröße, welche in Zusammenhang mit den Nulldurchgängen des Drosselstroms ermittelt wird, einen Parameter zu ermitteln, wobei der Parameter einen Strom durch die Induktivität in der Schaltungsanordnung charakterisiert. Der zu ermittelnde Parameter charakterisiert einen Strom, wobei der Strom bevorzugt der Eingangsstrom der Schaltungsanordnung ist.

In einer anderen Ausgestaltung der Erfindung ist der zu ermittelnde Parameter ein Strommittelwert des Drosselstroms durch die Induktivität. Bevorzugt erfolgt das abwechselnde Ansteuern des ersten und des zweiten Schaltelementes mit einer vorgebbaren Frequenz und der Strommittelwert wird insbesondere in Abhängigkeit der Periodendauer ermittelt.

Es wird ein Verfahren bereitgestellt bei dem vorteilhaft als Parameter ein Strommittelwert des Drosselstroms ermittelt wird. Dieser wird bevorzugt neben den bereits genannten Größen in Abhängigkeit der Periodendauer des alternierenden Drosselstroms ermittelt. Der zu ermittelnde Parameter als Strommittelwert entspricht oder korreliert bevorzugt mit dem Wert des Eingangsstroms der Schaltungsanordnung.

In einer anderen Ausgestaltung der Erfindung ist der zu ermittelnde Parameter, ein negativer oder positiver Spitzenwert des Drosselstroms durch die Induktivität. Bevorzugt entspricht der negative Spitzenwert des Drosselstroms dem negativen Minimum des Drosselstroms und der positive Spitzenwert dem positiven Maximum des Drosselstroms.

Vorteilhaft wird ein Verfahren bereitgestellt bei dem als Parameter negative und/ oder positive Spitzenwerte des Drosselstroms ermittelt werden.

In einer anderen Ausgestaltung der Erfindung umfasst das Ermitteln der Zeitdauer zwischen den Nulldurchgängen das Ermitteln eines ersten Zeitpunktes eines ersten Nulldurchgangs des Drosselstroms und das Ermitteln eines zweiten Zeitpunktes eines zweiten Nulldurchgangs des Drosselstroms. Bevorzugt umfasst das Ermitteln der Zeitdauer zwischen den Nulldurchgängen das Ermitteln eines ersten Zeitpunktes, bei dem das Vorzeichen des Drosselstroms von positiv auf negativ wechselt und das anschließende Ermitteln eines zweiten Zeitpunktes, bei dem das Vorzeichen des Drosselstroms von negativ auf positiv wechselt, oder umgekehrt.

Bevorzugt erfolgt das Ermitteln der Zeitpunkte der Nulldurchgänge mittels eines Sensors, welcher den Nulldurchgang erfasst, bevorzugt mittels eines Stromsensors oder mittels eines induktiv gewonnenen Signals.

Vorteilhaft wird ein Verfahren zur Ermittlung der Zeitpunkte zwischen den Nulldurchgängen bereitgestellt.

In einer anderen Ausgestaltung der Erfindung wird mittels eines Zählers, bevorzugt eines Mikrocontrollers, die Zeitdauer zwischen den Zeitpunkten, bevorzugt dem ersten und dem anschließenden zweiten Zeitpunkt oder dem zweiten und dem anschließenden ersten Zeitpunkt ermittelt.

Eine mittels einfacher technischer Mittel zu realisierende Ermittlung einer Zeitdauer ist die Verwendung eines Zählers, bevorzugt eines Mikrocontrollers. Jeder Mikrocontroller verfügt über einen Zähler, der in äquidistanten Zeitabständen weiterzählt. Aus der Differenz der Zählerstände von dem zweiten zu dem ersten Zeitpunkt lässt sich folglich die verstrichene Zeitdauer bestimmen.

Vorteilhaft wird ein Verfahren bereitgestellt zur Ermittlung der Zeitdauer zwischen den Zeitpunkten.

Ferner betrifft die Erfindung ein Computerprogramm, umfassend Befehle, die bei der Ausführung des Programms durch einen Computer diesen veranlassen, die beschriebenen Verfahren auszuführen.

Ferner betrifft die Erfindung ein computerlesbares Speichermedium, umfassend Befehle, die bei der Ausführung durch einen Computer diesen veranlassen, die beschriebenen Verfahren auszuführen.

Ferner betrifft die Erfindung einen Stromregler zur Regelung eines Drosselstromes durch eine Induktivität, mit einer Logikeinheit und einem Regler, wobei die Logikeinheit dazu eingerichtet ist, ein beschriebenes Verfahren auszuführen, wobei der ermittelte Parameter als Rückführgröße der Regelung von dem Regler berücksichtigt wird und bevorzugt der Tastgrad als Regelgröße ausgegeben wird, wobei die Ansteuerung des ersten und des zweiten Schaltelementes in Abhängigkeit des Tastgrads erfolgt.

Es wird ein Stromregler mit einer Logikeinheit und einem Regler bereitgestellt, zur Regelung eines Drosselstromes durch die Induktivität, bevorzugt des Strommittelwertes durch die Induktivität oder des Eingangsstromes der Schaltungsanordnung. Der Regler berücksichtigt einen mittels der beschriebenen Verfahren ermittelten Parameter als Rückführgröße. Bevorzugt wird der Tastgrad als Regelgröße ausgegeben. Aber auch die Schaltfrequenz oder ein beliebiges anderes Pulsmuster, bevorzugt bei einem direkt schaltenden Verfahren, kann als Regelgröße ausgegeben werden.

Vorteilhaft wird ein Stromregler bereitgestellt, der einen mittels einer Zeitdauer zwischen Nulldurchgängen ermittelten Parameter als Rückführgröße berücksichtigt. Vorteilhaft kann auf einen Stromsensor bei dieser Regelung verzichtet werden.

Ferner betrifft die Erfindung eine Vorrichtung, insbesondere ein Gleichspannungswandler oder ein Ladegerät, mit einer Induktivität, wobei die Induktivität in einer Schaltungsanordnung angeordnet ist, wobei die Vorrichtung dazu eingerichtet ist, ein beschriebenes Verfahren auszuführen. Der dabei ermittelte Parameter wird als Messgröße innerhalb der Vorrichtung weiterverwendet, beispielsweise bei der Plausibilisierung einer ermittelten oder berechneten, geschätzten, beobachteten oder gemessenen Größe. Oder der ermittelte Parameter wird über eine Schnittstelle, bevorzugt mittels Kabel, berührungslos, per Funk oder Lichtwellenleiter, nach außerhalb der Vorrichtung übertragen.

Es wird eine Vorrichtung bereitgestellt, in der die Schaltungsanordnung integriert ist und in der das Verfahren ausgeführt wird zur Ermittlung des Parameters. Der ermittelte Parameter wird entweder innerhalb der Vorrichtung für den Betrieb der Vorrichtung weiterverwendet oder nach außerhalb übertragen für eine weitere Verwendung außerhalb, bevorzugt in einer weiteren Vorrichtung oder einem Steuergerät.

Ferner betrifft die Erfindung einen Antriebsstrang mit einer beschriebenen Vorrichtung und insbesondere mit einer Leistungselektronik und/ oder einem elektrischen Antrieb. Ein derartiger Antriebsstrang dient beispielsweise dem Antrieb eines elektrischen Fahrzeugs. Mittels des Verfahrens und der Vorrichtung wird ein sicherer Betrieb des Antriebsstrangs ermöglicht.

Ferner betrifft die Erfindung ein Fahrzeug, mit einem beschriebenen Antriebsstrang. Vorteilhaft wird somit ein Fahrzeug bereitgestellt, welches eine beschriebene Vorrichtung umfasst.

Es versteht sich, dass die Merkmale, Eigenschaften und Vorteile des erfindungsgemäßen Verfahrens entsprechend auf den Stromregler, die Vorrichtung bzw. den Antriebsstrang und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

Kurze Beschreibung der Zeichnung

Im Folgenden soll die Erfindung anhand einiger Figuren näher erläutert werden, dazu zeigen:

Figur 1
eine schematische Darstellung einer Schaltungsanordnung,

Figur 2
eine schematische Darstellung einer erweiterten Schaltungsanordnung,

Figur 3
ein schematisch dargestelltes Strom-/ Zeit-Diagramm mit einem alternierenden Drosselstrom,

Figur 4
einen schematisch dargestellten Stromregler,

Figur 5
eine schematisch dargestellte Vorrichtung mit einer Induktivität, wobei sich die Induktivität in einer Schaltungsanordung befindet,

Figur 6
ein schematisch dargestelltes Fahrzeug mit einem Antriebsstrang,

Figur 7
ein schematisch dargestelltes Ablaufdiagramm für ein Verfahren zur Ermittlung eines Parameters, wobei der Parameter einen Strom oder eine Spannung in einer Schaltungsanordnung charakterisiert.

Ausführungsformen der Erfindung

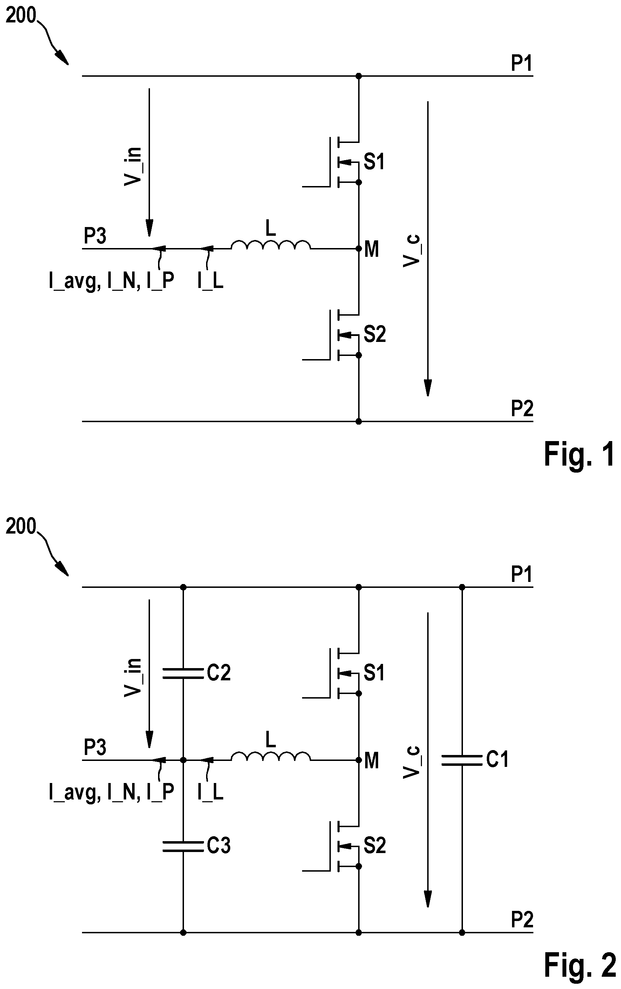

Die Figur 1 zeigt eine Schaltungsanordnung 200, wobei die Schaltungsanordnung 200 eine Induktivität L umfasst, durch die ein alternierender Drosselstrom I_L fließt. Die Induktivität ist bevorzugt eine Drossel oder eine Primär- oder Sekundärwicklung eines Transformators, welcher bevorzugt in einem Gleichspannungswandler oder in einem Ladegerät, bevorzugt zur galvanischen Trennung des Ein- und Ausgangs, eingesetzt wird. Der hochfrequente alternierende Drosselstrom I_L, bevorzugt bei einer Frequenz von mehreren 100 kHz, bewirkt einen Strom in den Zuleitungen der Induktivität L. Parameter, mit denen dieser Strom charakterisiert wird, sind bevorzugt ein Strommittelwert I_avg, negative Minima I_N und/ oder positive Maxima I_P des Drosselstroms I_L oder Spitzenwerte des Drosselstroms I_L. Der Drosselstrom I_L durch die Induktivität L bewirkt auch elektrische Spannungen in der Schaltungsanordnung. Ein Parameter, mit dem eine elektrische Spannungen charakterisiert wird, bevorzugt wenn eine Last oder Impedanz mit der Induktivität L verbunden ist, ist bevorzugt eine Spannung V_c, welche zwischen dem ersten und dem zweiten Potential P1, P2 anliegt. Diese Parameter I_avg, I_N, I_P, V_c lassen sich ermitteln in Abhängigkeit der Zeitdauer TN1 zwischen zwei Nulldurchgängen N_-, N_+ des Drosselstromes I_L.

Weiter umfasst die Schaltungsanordnung 200 bevorzugt eine Halbbrücke mit einem ersten Schaltelement S1 und einem zweiten Schaltelement S2. Das erste Schaltelement S1 ist einerseits mit einem ersten Potential P1 verbunden und andererseits mit einem Mittelabgriff M der Halbbrücke. Das zweite Schaltelement S2 wird einerseits mit einem zweiten Potential P2 verbunden ist und andererseits mit dem Mittelabgriff M der Halbbrücke verbunden. Die Induktivität L ist mit einem ersten Anschluss mit dem Mittelabgriff M verbunden ist und mit einem zweiten Anschluss mit einem dritten Potential P3. Bevorzugt liegt zwischen dem ersten Potential P1 und dem dritten Potential P3 eine Eingangsspannung V_in an. Diese Eingangsspannung V_in kann alternativ auch zwischen dem Dritten und dem zweiten Potential anliegen oder auch zwischen dem ersten Potential P1 und dem zweiten Potential P2 anliegen. Bei anliegender Eingangsspannung V_in kann über geeignete Ansteuerung, bevorzugt hochfrequente, der Schaltelemente S1 und S2 der alternierende Drosselstrom I_L durch die Induktivität L erzeugt werden. Die Eingangsspannung V_in ist bevorzugt eine Gleichspannung oder eine Wechselspannung, wobei im Vergleich zu der Frequenz des Drosselstroms I_L die Frequenz der Eingangsspannung sehr viel kleiner ist, bevorzugt beträgt die Frequenz ca. 50 Hz oder liegt zumindest unter 1kHz. Bevorzugt wird eine Wechselspannung mittels einem Diodengleichrichter zu einer Gleichspannung als Eingangsspannung gleichgerichtet.

Die Figur 2 zeigt eine erweiterte Schaltungsanordnung 200 der in Figur 1 dargestellten Schaltungsanordnung 200. Die Schaltungsanordnung 200 nach Figur 2 umfasst weiter einen ersten Kondensator C1, der zwischen dem ersten Potential P1 und dem zweiten Potential P2 angeordnet und mit diesen jeweils verbunden ist. Der erste Kondensator C1 ist bevorzugt ein Zwischenkreiskondensator und bevorzugt als Elektrolyt-Kondensator ausgestaltet. Bevorzugt lässt sich ein Parameter, welcher die Spannung V_c an diesem ersten Kondensator C1 charakteriesiert, in Abhängigkeit einer Zeitdauer TNE1 und/ oder TNE2 zwischen einem Nulldurchgang N_-, N_+ und einem Eckpunkt E_-, E_+ des Drosselstromes I_L ermitteln (vgl. auch Figur 3).

Beispielsweise gilt für diese Schaltungsanordnung:

Während TNE1:

$$\frac{\Delta I\_L}{\Delta t} = \frac{V\_in}{L}$$

$$\Delta I\_L = \frac{V_{in}}{L} \cdot \Delta t = \frac{V_{in}}{L} \cdot TNE1 \quad (1)$$

Während TNE2:

$$\frac{\Delta I\_L}{\Delta t} = \frac{V\_c - V\_in}{L}$$

$$V\_c = V\_in + \frac{\Delta I\_L \cdot L}{\Delta t} = V\_in + \frac{\Delta I\_L \cdot L}{TNE2} \quad (2)$$

(1) in (2) ergibt:

$$V\_c = V\_in + \frac{V\_in \cdot TNE1}{TNE2}$$

Ferner umfasst die Schaltungsanordnung einen zweiten und/ oder einen dritten Kondensator C2, C3. Der zweite Kondensator C2 ist einerseits mit dem ersten Potential P1 und andererseits mit dem dritten Potential P3 verbunden. Der dritte Kondensator C3 ist einerseits mit dem dritten Potential P3 und andererseits mit dem zweiten Potential P2 verbunden. Diese Kondensatoren C2, C3 dienen der Glättung des Stromverlaufs der Ströme und des Spannungsverlaufs der Spannungen in der Schaltungsanordnung 200, bevorzugt wenn die Schaltelemente S1 und S2 wechselseitig geschlossen und geöffnet werden.

Die Figur 3 zeigt ein schematisch dargestelltes Strom-/Zeit-Diagramm. In das Diagramm ist der alternierende Drosselstrom I_L durch eine Drossel, eine Primär- oder Sekundärwicklung eines Transformators oder eine Induktivität L eingezeichnet. Der dargestellte Verlauf des Drosselstroms I_L resultiert, wenn die Schaltelemente S1 und S2 wechselseitig geschlossen und geöffnet werden. Beispielsweise ist eine Zeitdauer S2on eingezeichnet, während der das zweite Schaltelement S2 eingeschaltet ist. Während dieser Zeitdauer S2on ist folglich das erste Schaltelement S1 geöffnet. Weiter ist eine Zeitdauer S1on eingezeichnet, während der der das erste Schaltelement S1 geschlossen ist und folglich das zweite Schaltelement S2 geöffnet ist. Diese Abfolge der Zeitdauern S2on und S1on wiederholen sich. Zwischen der Zeitdauern S2on und S1on oder S2on und S1on erfolgt das Umschalten der Schaltelemente. Die Periodendauer T ergibt sich aus der Summe der Zeitdauern S2on und S1on. Das Verhältnis der Zeitdauer S1on zu T wird als Tastgrad a1 bezeichnet. Zu den Umschaltzeitpunkten der Schaltelemente ergeben sich die Eckpunkte E_-, E_+ und negativen und positiven Spitzenwerte, also das negative Minimum I_N und das positive Maximum I_P des Drosselstroms I_L durch die Induktivität L. Im Mittel ergibt sich für den hochfrequenten Drosselstrom I_L ein Strommittelwert I_avg, welcher sich mittels graphischer Analyse des regelmäßigen hochfrequenten Drosselstroms I_L in dem Diagramm in Abhängigkeit einer Zeitdauer TN1 zwischen zwei Nulldurchgängen N_-, N_+ des Drosselstromes I_L ermitteln lässt, bevorzugt in Abhängigkeit der Eingangsspannung V_in, der Größe der Induktivität L, einem Tastgrad a1 und der Zeitdauer TN1 zwischen den Nulldurchgängen des Drosselstromes I_L, und der Periodendauer T. Falls die Erfassung von V_c einfacher als die Erfassung von V_in ist lassen sich die unten beschriebenen Formeln auch bevorzugt in Abhängigkeit von V_c aufstellen.

Mittels dem Strahlensatz der Elementargeometrie ergibt sich aus dem geometrischen Verlauf des Drosselstroms:

$$\frac{TN1}{-I\_N} = \frac{\frac{T}{2}}{I\_avg - I\_N}$$

Und für den steigenden Strom mit di/dt=Vin/L während der Zeitdauer S1on gilt:

$$I\_P - I\_N = \frac{V\_in}{L} S1on$$

Daraus ergibt sich:

$$I_{avg} = \frac{V\_in}{2L} a_1 (T - 2 \cdot TN1)$$

Weiter lassen sich auch der negative oder der positive Spitzenwert I_N, I_P des Drosselstroms I_L durch die Induktivität L ermitteln:
Aus dem gesamten Stromrippel

$$I\_P - I\_N = \frac{V\_in}{L} a_1 \cdot T$$

Und

$$I\_P = I_{avg} + \frac{I\_P - I\_N}{2}$$

sowie

$$I\_N = I_{avg} - \frac{I\_P - I\_N}{2}$$

Lässt sich durch Einsetzen I_N und I_P bestimmen:

$$I\_N = -\frac{V\_in}{L} a_1 \cdot TN1$$

$$I\_P = \frac{V\_in}{L} a_1 (T - TN1)$$

Die Formeln gelten nur für diese Schaltung im stationären, eingeschwungenen Zustand, jedoch lassen sich auch für andere Topologien ähnliche Formeln herleiten. Der große Vorteil des Verfahrens wird hier noch einmal deutlich: Die Berechnung der Ströme und des darauf basierenden Regeleingriffs in die Schaltung kann bevorzugt nach der Zeitdauer TN1 erfolgen und kann sich bevorzugt auch noch über die nächsten Perioden erstrecken. Beim klassischen ZCD-Verfahren müsste in diesem Fall auf das Signal des Nulldurchgangs N_- unmittelbar reagiert werden. Dies reduziert bevorzugt die Anforderungen an die Hardware und bietet genug Zeit für eine Plausibilisierung der Messung.

So wird bevorzugt durch das Verfahren ein hochdynamischer "Sensor" für den Mittelwert des geschalteten

EP 4 200 968 B1

Stromes realisiert. Mit einer klassischen Regelungsstruktur kann der gewünschte Drosselstrom eingestellt werden. Der ermittelte Strommittelwert I_avg des Drosselstromes I_L steht bereits nach einer Schaltperiode zur Verfügung, was es möglich macht den darauf agierenden Regler sehr performant zu machen. Das ermöglicht, die schnelle geschaltete Stromdynamik zu stabilisieren. Analog lassen sich für andere Topologien auf Basis der gemessenen Zeitdauern zwischen den Nulldurchgängen bzw. zwischen Nulldurchgang und Eckpunkt Rückschlüsse auf andere Zustände treffen, was zu einer Reduktion der benötigten Sensoren führt und eine direkte Kostenersparnis mit sich bringt.

Figur 4 zeigt einen schematisch dargestellten Stromregler 280 zur Regelung eines Drosselstromes I_L durch eine Induktivität L. In einer Logikeinheit 290 wird in Abhängigkeit der ermittelten Zeitdauer TN1, einer Eingangsspannung V_in und dem Tastgrad a1 der Parameter ermittelt. Der gemäß dem beschriebenen Verfahren in Abhängigkeit einer Zeitdauer TN1 zwischen zwei Nulldurchgängen N_-, N_+ des Drosselstromes I_L ermittelter Parameter, welcher bevorzugt ein Strommittelwert I_avg, ein negativer Spitzenwert I_N und/ oder positiver Spitzenwert I_P des Drosselstroms I_L durch die Induktivität L ist, wird als Rückführgröße der Regelung von dem Regler 295 des Stromreglers 280 berücksichtigt. Dem Regler 295 wird hierzu die Regelabweichung als Differenz eines Stromsollwertes I_soll und der Rückführgröße zugeführt. Bevorzugt wird ein Tastgrad a1 vom Regler 295 als Regelgröße ermittelt und ausgegeben. Im Vergleich zum klassischen ZCD Verfahren wird somit keine besondere Schnittstelle zum PWM Modulator/ Timer Modul benötigt, sondern lediglich der Tastgrad vorgegeben. Somit wird die Anzahl der verwendbaren Mikrocontroller deutlich erhöht.

Figur 5 zeigt eine schematisch dargestellte Vorrichtung 300 mit einer Induktivität L, wobei sich die Induktivität in einer Schaltungsanordnung 200 befindet. Die Vorrichtung 300 ist insbesondere als ein Gleichspannungswandler und/ oder als ein Ladegerät ausgestaltet. Die Vorrichtung 300 ist dazu eingerichtet, gemäß der beschriebenen Verfahren in Abhängigkeit einer Zeitdauer TN1 zwischen zwei Nulldurchgängen N_-, N_+ des Drosselstromes I_L, einen Parameter zu ermitteln, bevorzugt einen Parameter als einen Strommittelwert I_avg, einen negativen Spitzenwert I_N oder einen positiven Spitzenwert I_P. Der ermittelte Parameter I_avg, I_N, I_P, V_c wird als Messgröße innerhalb der Vorrichtung 300 weiterverwendet oder über eine Schnittstelle nach außerhalb der Vorrichtung 300 übertragen.

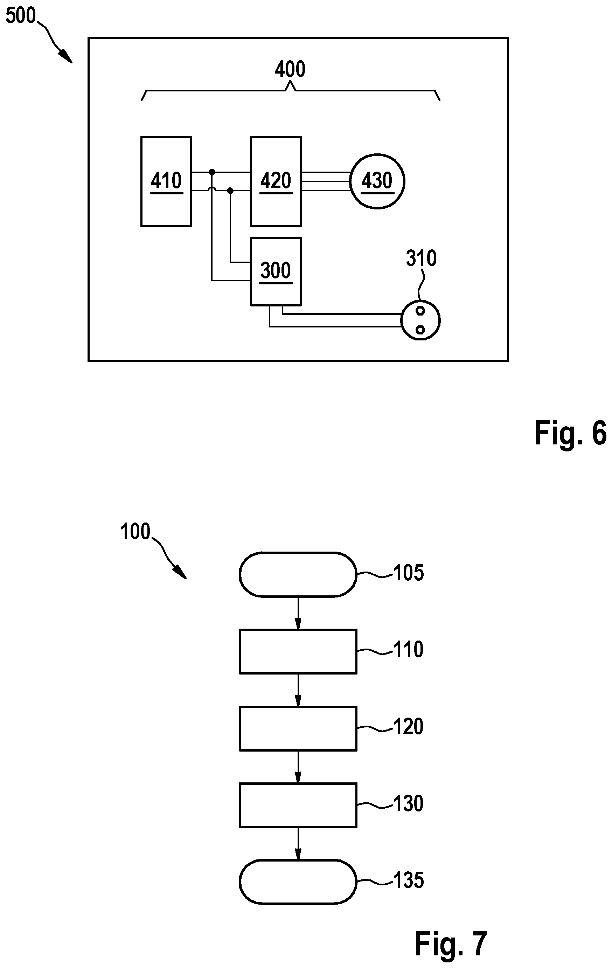

Figur 6 zeigt ein schematisch dargestelltes Fahrzeug 500, bevorzugt ein Kraftfahrzeug, Schiff oder Flugzeug mit einem Antriebsstrang 400. Der Antriebsstrang umfasst neben der Vorrichtung 300 bevorzugt eine Batterie 410, einen Inverter 420, eine elektrische Maschine 430 und/ oder eine Ladebuchse 310. Bevorzugt versorgt die Batterie 410 den Inverter 420 mit elektrischer Energie. Bevorzugt wandelt der Inverter 420 die elektrische Energie der Batterie 410 in eine mehrphasige Wechselspannung zur Versorgung der elektrischen Maschine 430. Bevorzugt ist die Vorrichtung 300 als Gleichspannungswandler oder Ladegerät ausgestaltet. Bevorzugt wandelt der Gleichspannungswandler die elektrische Energie der Batterie 410 in eine Niederspannung, bevorzugt zur Versorgung eines Bordnetzes eines Fahrzeuges 500, und/ oder umgekehrt. Bevorzugt wandelt das Ladegerät eine über die Ladebuchse 310 zugeführte elektrische Energie in eine Hochspannungsenergie, bevorzugt zum Laden der elektrischen Batterie 410 oder umgekehrt.

Figur 7 zeigt ein schematisch dargestelltes Ablaufdiagramm für ein Verfahren 100 zur Ermittlung eines Parameters I_avg, I_N, I_P, V_c, wobei der Parameter I_avg, I_N, I_P, V_c einen Strom oder eine Spannung in einer Schaltungsanordnung 200 charakterisiert. Das Verfahren beginnt mit Schritt 105. In Schritt 110 werden bevorzugt das erste und das zweite Schaltelement S1, S2 abwechselnd angesteuert, sodass sich ein alternierender Drosselstrom I_L durch die Induktivität L ergibt. In Schritt 120 wird mindestens eine Zeitdauer TN1 zwischen zwei Nulldurchgängen N_-, N_+ des Drosselstromes I_L ermittelt. In Schritt 130 wird ein Parameter I_avg, I_N, I_P, V_c in Abhängigkeit der ermittelten Zeitdauer TN1 ermittelt. Mit Schritt 135 wird das Verfahren beendet.

**Patentansprüche**

1.  Verfahren (100) zur Ermittlung eines Parameters (I_avg, I_N, I_P, V_c), wobei der Parameter (I_avg, I_N, I_P, V_c) einen Strom oder eine Spannung in einer Schaltungsanordnung (200) charakterisiert,

    wobei die Schaltungsanordnung (200) eine Induktivität (L) umfasst, wobei ein alternierender Drosselstrom (I_L) durch die Induktivität (L) fließt,
    **gekennzeichnet durch** die Schritte:

    Ermitteln (120) mindestens einer Zeitdauer (TN1) zwischen zwei Nulldurchgängen (N_-, N_+) des Drosselstromes (I_L);
    Ermitteln (130) des Parameters (I_avg, I_N, I_P, V_c) in Abhängigkeit der ermittelten Zeitdauer (TN1).

2.  Verfahren (100) nach Anspruch 1 zur Ermittlung eines Parameters (I_avg, I_N, I_P), wobei der Parameter (I_avg, I_N, I_P) einen Strom durch die Induktivität (L) in der Schaltungsanordnung (200) charakterisiert,

wobei die Schaltungsanordnung (200) mindestens eine Halbbrücke mit einem ersten Schaltelement (S1) und einem zweiten Schaltelement (S2) umfasst,

wobei das erste Schaltelement (S1) einerseits mit einem ersten Potential (P1) verbunden ist und andererseits mit einem Mittelabgriff (M) der Halbbrücke verbunden ist,

wobei das zweite Schaltelement (S2) einerseits mit einem zweiten Potential (P2) verbunden ist und andererseits mit dem Mittelabgriff (M) der Halbbrücke verbunden ist,

wobei die Induktivität (L) mit einem ersten Anschluss mit dem Mittelabgriff (M) verbunden ist und mit einem zweiten Anschluss mit einem dritten Potential (P3) verbunden ist,

wobei zwischen dem ersten Potential (P1) und dem dritten Potential (P3) eine Eingangsspannung (V_in) anliegt, mit den Schritten:

Abwechselndes Ansteuern (110) des ersten und des zweiten Schaltelementes (S1, S2) mit einem vorgebbaren Tastgrad (a1), sodass sich der alternierende Drosselstrom (I_L) durch die Induktivität (L) ergibt;

Ermitteln (120) der Zeitdauer (TN1, TN2) zwischen den Nulldurchgängen des Drosselstroms (I_L);

Ermitteln (130) des Parameters (I_avg, I_N, I_P) in Abhängigkeit der Eingangsspannung (V_in), der Größe der Induktivität (L), dem Tastgrad (a1) und der Zeitdauer (TN1, TN2) zwischen den Nulldurchgängen des Drosselstromes (I_L).

3. Verfahren (100) nach Anspruch 2, wobei der zu ermittelnde Parameter (I_avg) ein Strommittelwert des Drosselstroms (I_L) durch die Induktivität (L) ist und
wobei insbesondere das abwechselnde Ansteuern (110) des ersten und des zweiten Schaltelementes (S1, S2) mit einer vorgebbaren Frequenz (1/T) erfolgt und der Strommittelwert insbesondere in Abhängigkeit der Periodendauer (T) ermittelt wird.

4. Verfahren (100) nach Anspruch 2, wobei der zu ermittelnde Parameter (I_N, I_P) ein negativer Spitzenwert (I_N) oder ein positiver Spitzenwert (I_P) des Drosselstroms (I_L) durch die Induktivität (L) ist.

5. Verfahren (100) nach einem der vorhergehenden Ansprüche, wobei das Ermitteln der Zeitdauer (TN1, TN2) zwischen den Nulldurchgängen das Ermitteln eines ersten Zeitpunktes eines ersten Nulldurchgangs (N_-) des Drosselstroms (I_L) und das Ermitteln eines zweiten Zeitpunktes eines zweiten Nulldurchgangs (N_+) des Drosselstroms (I_L) umfasst, insbesondere das Ermitteln eines ersten Zeitpunktes, bei dem das Vorzeichen des Drosselstroms (I_L) von positiv auf negativ wechselt und das anschließende Ermitteln eines zweiten Zeitpunktes, bei dem das Vorzeichen des Drosselstroms (I_L) von negativ auf positiv wechselt, oder umgekehrt.

6. Verfahren (100) nach Anspruch 5, wobei mittels eines Zählers, bevorzugt eines Mikrocontrollers, die Zeitdauer (TN1, TN2) zwischen den Zeitpunkten ermittelt wird, bevorzugt zwischen dem ersten und dem anschließenden zweiten Zeitpunkt oder dem zweiten und dem anschließenden ersten Zeitpunkt ermittelt.

7. Computerprogramm, umfassend Befehle, die bei der Ausführung des Programms durch einen Computer diesen veranlassen, das Verfahren nach Anspruch 1 bis 6 auszuführen.

8. Computerlesbares Speichermedium, umfassend Befehle, die bei der Ausführung durch einen Computer diesen veranlassen, das Verfahren nach Anspruch 1 bis 6 auszuführen.

9. Stromregler (280) zur Regelung eines Drosselstromes (I_L) durch eine Induktivität (L), mit einer Logikeinheit (290) und einem Regler (295), wobei die Logikeinheit (290) dazu eingerichtet ist,

ein Verfahren (100) nach den Ansprüchen 1 bis 6 auszuführen,

wobei der ermittelte Parameter (I_avg, I_N, I_P) als Rückführgröße der Regelung von dem Regler (295) berücksichtigt wird und bevorzugt der Tastgrad (a1) als Regelgröße ausgegeben wird,

wobei die Ansteuerung des ersten und des zweiten Schaltelementes (S1, S2) in Abhängigkeit des Tastgrads (a1) erfolgt.

10. Vorrichtung (300), insbesondere ein Gleichspannungswandler oder ein Ladegerät, mit einer Induktivität (L), wobei die Induktivität (L) in einer Schaltungsanordnung (200) angeordnet ist, wobei die Vorrichtung (300) dazu eingerichtet ist, ein Verfahren (100) nach den Ansprüchen 1 bis 6 auszuführen, wobei der ermittelte Parameter (I_avg, I_N, I_P, V_c) als Messgröße innerhalb der Vorrichtung (300) weiterverwendet wird oder über eine Schnittstelle nach außerhalb der Vorrichtung (300) übertragen wird.

11. Antriebsstrang (400) mit einer Vorrichtung (300) gemäß Anspruch 10.

12. Fahrzeug (500) mit einem Antriebsstrang (400) nach Anspruch 11.

**Claims**

1. Method (100) for ascertaining a parameter (I_avg, I_N, I_P, V_c),

   wherein the parameter (I_avg, I_N, I_P, V_c) characterizes a current or a voltage in a circuit arrangement (200),
   wherein the circuit arrangement (200) comprises an inductor (L),
   wherein an alternating inductor current (I_L) flows through the inductor (L),
   **characterized by** the steps of:

   ascertaining (120) at least one period of time (TN1) between two zero crossings (N_-, N_+) of the inductor current (I_L);
   ascertaining (130) the parameter (I_avg, I_N, I_P, V_c) on the basis of the ascertained period of time (TN1).

2. Method (100) according to Claim 1 for ascertaining a parameter (I_avg, I_N, I_P), wherein the parameter (I_avg, I_N, I_P) characterizes a current through the inductor (L) in the circuit arrangement (200),

   wherein the circuit arrangement (200) comprises at least one half bridge having a first switching element (S1) and a second switching element (S2),
   wherein the first switching element (S1) is connected on the one hand to a first potential (P1) and is connected on the other hand to a middle tap (M) of the half bridge,
   wherein the second switching element (S2) is connected on the one hand to a second potential (P2) and is connected on the other hand to the middle tap (M) of the half bridge,
   wherein a first connection of the inductor (L) is connected to the middle tap (M) and a second connection of said inductor is connected to a third potential (P3),
   wherein an input voltage (V_in) is applied between the first potential (P1) and the third potential (P3),
   having the steps of:

   alternatingly controlling (110) the first and second switching elements (S1, S2) using a predefined duty cycle (a1) so that the alternating inductor current (I_L) results through the inductor (L);
   ascertaining (120) the period of time (TN1, TN2) between the zero crossings of the inductor current (I_L);
   ascertaining (130) the parameter (I_avg, I_N, I_P) on the basis of the input voltage (V_in), the size of the inductor (L), the duty cycle (a1) and the period of time (TN1, TN2) between the zero crossings of the inductor current (I_L).

3. Method (100) according to Claim 2, wherein the parameter to be ascertained (I_avg) is an average current value of the inductor current (I_L) through the inductor (L) and
   wherein, in particular, the alternating control (110) of the first and second switching elements (S1, S2) takes place using a predefined frequency (1/T) and the average current value is ascertained in particular on the basis of the period duration (T).

4. Method (100) according to Claim 2, wherein the parameter to be ascertained (I_N, I_P) is a negative peak value (I_N) or a positive peak value (I_P) of the inductor current (I_L) through the inductor (L).

5. Method (100) according to one of the preceding claims, wherein ascertaining the period of time (TN1, TN2) between the zero crossings comprises ascertaining a first point in time of a first zero crossing (N_-) of the inductor current (I_L) and ascertaining a second point in time of a second zero crossing (N_+) of the inductor current (I_L), in particular ascertaining a first point in time at which the sign of the inductor current (I_L) changes from positive to negative and subsequently ascertaining a second point in time at which the sign of the inductor current (I_L) changes from negative to positive, or vice versa.

6. Method (100) according to Claim 5, wherein the period of time (TN1, TN2) between the points in time, preferably between the first and the subsequent second point in time or between the second and the subsequent first point in time, is ascertained by means of a counter, preferably a microcontroller.

7. Computer program comprising instructions which, when the program is executed by a computer, cause the latter to perform the method according to Claims 1 to 6.

8. Computer-readable storage medium comprising instructions which, when executed by a computer, cause the latter to perform the method according to Claims 1 to 6.

9. Current controller (280) for controlling an inductor current (I_L) through an inductor (L), having a logic unit (290) and a controller (295), wherein the logic unit (290) is set up to

perform a method (100) according to Claims 1 to 6,
wherein the ascertained parameter (I_avg, I_N, I_P) is taken into consideration by the controller (295) as a feedback variable of the control and preferably the duty cycle (a1) is output as a control variable,
wherein the control of the first and second switching elements (S1, S2) takes place on the basis of the duty cycle (a1).

10. Apparatus (300), in particular a DC-DC voltage converter or a charging device, having an inductor (L), wherein the inductor (L) is arranged in a circuit arrangement (200), wherein the apparatus (300) is set up to perform a method (100) according to Claims 1 to 6,
wherein the ascertained parameter (I_avg, I_N, I_P, V_c) is reused as a measured variable within the apparatus (300) or is transmitted outside the apparatus (300) via an interface.

11. Drive train (400) having an apparatus (300) according to Claim 10.

12. Vehicle (500) having a drive train (400) according to Claim 11.

**Revendications**

1. Procédé (100) de détermination d'un paramètre (I_avg, I_N, I_P, V_c),

le paramètre (I_avg, I_N, I_P, V_c) caractérisant un courant ou une tension dans un agencement de circuit (200),
l'agencement de circuit (200) comprenant une inductance (L),
un courant d'arrêt alternatif (I_L) circulant à travers l'inductance (L),
**caractérisé par** les étapes consistant à :

déterminer (120) au moins une durée (TN1) entre deux passages par zéro (N_-, N_+) du courant d'arrêt (I_L) ;
déterminer (130) le paramètre (I_avg, I_N, I_P, V_c) en fonction de la durée déterminée (TN1).

2. Procédé (100) selon la revendication 1 de détermination d'un paramètre (I_avg, I_N, I_P), le paramètre (I_avg, I_N, I_P) caractérisant un courant à travers l'inductance (L) dans l'agencement de circuit (200),

l'agencement de circuit (200) comprenant au moins un demi-pont comportant un premier élément de commutation (S1) et un deuxième élément de commutation (S2),
le premier élément de commutation (S1) étant connecté d'une part à un premier potentiel (P1) et d'autre part à une prise centrale (M) du demi-pont,
le deuxième élément de commutation (S2) étant connecté d'une part à un deuxième potentiel (P2) et d'autre part à la prise centrale (M) du demi-pont,
l'inductance (L) étant connectée par une première borne à la prise centrale (M) et par une deuxième borne à un troisième potentiel (P3),
une tension d'entrée (V_in) étant appliquée entre le premier potentiel (P1) et le troisième potentiel (P3),
comprenant les étapes consistant à :

commander en alternance (110) les premier et deuxième éléments de commutation (S1, S2) avec un rapport cyclique (a1) prédéfinissable, de telle sorte qu'il en résulte le courant d'arrêt alternatif (I_L) à travers l'inductance (L) ;
déterminer (120) la durée (TN1, TN2) entre les passages par zéro du courant d'arrêt (I_L) ;
déterminer (130) le paramètre (I_avg, I_N, I_P) en fonction de la tension d'entrée (V_in), de la valeur de l'inductance (L), du rapport cyclique (a1) et de la durée (TN1, TN2) entre les passages par zéro du courant d'arrêt (I_L).

3. Procédé (100) selon la revendication 2, dans lequel le paramètre (I_avg) à déterminer est une valeur de courant moyenne du courant d'arrêt (I_L) à travers l'inductance (L) et
dans lequel la commande en alternance (110) des premier et deuxième éléments de commutation (S1, S2) s'effectue en particulier avec une fréquence (1/T) prédéfinissable et la valeur de courant moyenne est en particulier déterminée en fonction de la période (T).

4. Procédé (100) selon la revendication 2, dans lequel le paramètre (I_N, I_P) à déterminer est une valeur crête négative (I_N) ou une valeur crête positive (I_P) du courant d'arrêt (I_L) à travers l'inductance (L).

5. Procédé (100) selon l'une quelconque des revendications précédentes, dans lequel la détermination de la durée (TN1, TN2) entre les passages par zéro comprend la détermination d'un premier instant d'un premier passage par zéro (N_-) du courant d'arrêt (I_L) et la détermination d'un deuxième instant d'un deuxième passage par zéro (N_+) du courant d'arrêt (I_L), en particulier la détermination d'un premier instant auquel le signe du courant d'arrêt (I_L) passe de positif à négatif et la détermination suivante d'un deuxième instant auquel le signe du courant d'arrêt (I_L) passe de négatif à positif, ou inversement.

6. Procédé (100) selon la revendication 5, dans lequel la durée (TN1, TN2) est déterminée au moyen d'un compteur, de préférence d'un microcontrôleur, entre lesdits instants, de préférence déterminée entre le premier instant et le deuxième instant suivant ou le deuxième instant et le premier instant suivant.

7. Programme informatique comprenant des instructions qui, lors de l'exécution du programme par un ordinateur, amènent ce dernier à mettre en œuvre le procédé selon les revendications 1 à 6.

8. Support de stockage lisible par ordinateur, comprenant des instructions qui, lors de leur exécution par un ordinateur, amènent ce dernier à mettre en œuvre le procédé selon les revendications 1 à 6.

9. Régulateur de courant (280) pour la régulation d'un courant d'arrêt (I_L) à travers une inductance (L), comprenant une unité logique (290) et un régulateur (295), dans lequel l'unité logique (290) est configurée pour

mettre en œuvre un procédé (100) selon l'une quelconque des revendications 1 à 6,
le paramètre (I_avg, I_N, I_P) déterminé étant pris en compte comme grandeur de rétroaction de la régulation par le régulateur (295) et, de préférence, le rapport cyclique (a1) étant délivré comme grandeur de réglage,
la commande des premier et deuxième éléments de commutation (S1, S2) s'effectuant en fonction du rapport cyclique (a1).

10. Dispositif (300), en particulier un convertisseur de tension continue ou un chargeur, comprenant une inductance (L), l'inductance (L) étant disposée dans un agencement de circuit (200), le dispositif (300) étant configuré pour mettre en œuvre un procédé (100) selon les revendications 1 à 6,
le paramètre (I_avg, I_N, I_P, V_c) déterminé étant réutilisé comme grandeur de mesure à l'intérieur du dispositif (300) ou étant transmis à l'extérieur du dispositif (300) par l'intermédiaire d'une interface.

11. Chaîne cinématique (400) comprenant un dispositif (300) selon la revendication 10.

12. Véhicule (500), comprenant une chaîne cinématique (400) selon la revendication 11.

**Fig. 1**

**Fig. 2**

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006061343 A1
- US 2009309573 A1
- JP 2003092877 A
- CH 701856 A2